# EUROPÄISCHE PATENTSCHRIFT

(11) **EP 2 390 156 B1**
(45) Veröffentlichungstag und Bekanntmachung des Hinweises auf die Patenterteilung: **26.09.2012**
(21) Anmeldenummer: 10163950.8
(22) Anmeldetag: 26.05.2010
(51) Int. Cl.: B61G 1/40, B61G 3/28

(54) **Kupplungskopf für ein spurgeführtes Fahrzeug**
Coupling head for a railway vehicle
Tête d'accouplement pour un véhicule ferroviaire

(43) Veröffentlichungstag der Anmeldung: 30.11.2011
(73) Patentinhaber: Voith Patent GmbH, 89522 Heidenheim (DE)
(72) Erfinder: Schulz, Jörn, 38690, Vienenburg (DE)
(74) Vertreter: Rupprecht, Kay

(56) Entgegenhaltungen:
- WO-A1-01/34448
- CH-A- 390 982
- FR-A- 417 503
- GB-A- 109 614

## Beschreibung

Die Erfindung betrifft einen Kupplungskopf für ein spurgeführtes Fahrzeug zum Ausbilden einer mechanischen Verbindung mit einem Gegenkupplungskopf, wobei der Kupplungskopf einen Kuppeltrichter zum Aufnehmen eines mit dem Gegenkupplungskopf verbundenen oder verbindbaren kraftübertragenden Kuppelelements und mindestens ein senkrecht zur Kupplungsrichtung relativ zum Kuppeltrichter bewegbares Verriegelungselement aufweist, welches mit einem in dem Kuppeltrichter aufgenommenen Kuppelelement in einen lösbaren Eingriff bringbar ist zum Verhindern eines Herausgleitens des in dem Kuppeltrichter aufgenommenen Kuppelelements, sowie gemäss den restlichen Merkmalen des Oberbegriffs des unabhängigen Anspruchs 1.

Ein derartiger Kupplungskopf ist dem Prinzip nach bereits aus der Schienenfahrzeugtechnik bekannt. Als Beispiel hierfür sei die in Russland eingesetzte Zugkupplung vom Typ BSU oder aber auch eine Kupplung der Bauart "Georg Fischer" genannt. Ein Kupplungskopf einer Zugkupplung der Bauart "Georg Fischer" weist beispielsweise als Kuppeltrichter eine Aussparung für die Aufnahme eines als Kuppelzapfen ausgebildeten Kuppelelements des Gegenkupplungskopfes auf. Ferner umfasst ein Kupplungskopf einer Zugkupplung der Bauart "Georg Fischer" in der Regel ein als Schubriegel ausgebildetes Verriegelungselement. Dabei ist der Kupplungskopf nicht nur mit dem als Aufnahme ausgebildeten Kuppeltrichter, sondern auch mit einem in der Regel als halbkugelförmigen Kugelzapfen ausgebildeten Kuppelelement ausgerüstet, so dass zwei baugleiche Kupplungsköpfe eine mechanische Verbindung ausbilden können.

Im Unterschied zu dem Kupplungskopf einer Zugkupplung der Bauart "Georg Fischer" allerdings ist ein Kupplungskopf einer russischen Zugkupplung vom Typ BSU nur mit einem Kuppeltrichter ausgeführt, wobei der Kupplungskopf mit einem baugleichen Gegenkupplungskopf mechanisch verbindbar ist, indem zusätzlich zu dem Kupplungskopf ein kraftübertragendes Kuppelelement vorgesehen wird, welches in den jeweiligen Kuppeltrichtern des Kupplungskopfes und des Gegenkupplungskopfes aufgenommen und dort fixiert wird.

Zum Entkuppeln zweier miteinander mechanisch verbundener Kupplungsköpfe kommt bei Zugkupplungen vom Typ BSU eine manuell zu betätigende Entkuppelvorrichtung zum Einsatz, wobei mit Hilfe eines kurbelähnlichen Werkzeuges per Hand das mindestens eine Verriegelungselement von einem der miteinander gekuppelten Kupplungsköpfe relativ zum Kuppeltrichter des Kupplungskopfes senkrecht zur Kupplungsrichtung bewegt wird, um den kraftschlüssigen Eingriff mit dem in dem Kuppeltrichter aufgenommenen Kuppelelement zu lösen und somit ein Herausgleiten des in dem Kuppeltrichter aufgenommenen Kuppelelements zu ermöglichen. Bei den herkömmlichen Lösungen muss somit der gesamte Entkuppelvorgang per Hand ausgeführt werden, was relativ zeitaufwändig ist.

Ferner führen bei den bisher ausschließlich in Russland eingesetzten Kupplungen vom Typ BSU die schwierigen Umgebungsbedingungen (Temperaturen bis -50° C, Schnee, Eis, hoher Verschmutzungsgrad etc.) zu Problemen bei der mit Hilfe des kurbelähnlichen Werkzeuges zu betätigenden Spindel auf, welche beim Entkuppeln das mindestens eine Verriegelungselement senkrecht zur Kupplungsrichtung relativ zum Kuppeltrichter bewegen soll. Weitere Probleme macht das nach jedem Entkuppelvorgang nötige, ebenfalls manuelle Einjustieren des Spindeltriebs auf eine exakte Position, welches unumgänglich ist, um eventuelle Schäden beim nächsten Kuppelvorgang zu verhindern.

Aus der Druckschrift GB 109 614 A ist eine Kupplung für schienengeführte Fahrzeuge bekannt, welche einen Kupplungskopf mit einem Kuppeltrichter aufweist. Der Kuppeltrichter ist ausgelegt, ein mit einem Gegenkupplungskopf verbundenes oder verbindbares kraftübertragendes Kuppelelement aufzunehmen. Das kraftübertragendes Kuppelelement weit zu diesem Zweck eine horizontale Bohrung auf, durch welche ein senkrecht zur Kupplungsrichtung relativ zum Kupplungstrichter bewegbares Verriegelungselement geführt werden kann. Sobald das Verriegelungselement durch die Bohrung des kraftübertragenen Kupplungselements geführt ist, verhindert diese das Herausgleiten des in dem Kuppeltrichter aufgenommenen Kuppelelements.

Aus der Druckschrift CH 390 982 A ist eine Kupplung vom Typ "Georg-Fischer" bekannt. Diese Kupplung weist einen Kupplungskopf mit einem Kuppeltrichter auf zum Aufnehmen eines mit einem Gegenkupplungskopf verbundenen oder verbindbaren kraftübertragenen Kuppelelements. Ein im Kupplungskopf angeordnetes Verriegelungselement soll dabei senkrecht zur Kupplungsrichtung relativ zum Kuppeltrichter bewegbar sein, um das in dem Kuppeltrichter aufgenommene Kuppelelement in lösbaren Eingriff zu bringen und das Hausgleiten des in dem Kuppeltrichter aufgenommenen Kuppelelements zu verhindern. Des Weiteren soll im Inneren des Kupplungskopfes ein Hebelement vorgesehen sein, welches an dem Verriegelungselement angelenkt ist. Das Hebelement kann mit Hilfe eines am Kupplungskopf befestigten Betätigungselements relativ zum Kuppeltrichter senkrecht zur Kupplungsrichtung beweg werden.

Weitere Kupplungen sind aus den Druckschriften WO 2001/34448 A1 und FR 417 503 A bekannt.

Auf Grundlage der insbesondere bei russischen Zugkupplungen vom Typ BSU auftretenden Probleme liegt der Erfindung die Aufgabe zugrunde, einen Kupplungskopf der eingangs genannten Art derart weiterzubilden, dass der gesamte Entkuppelvorgang erleichtert wird.

Diese Aufgabe wird erfindungsgemäß durch den Gegenstand des unabhängigen Patentanspruches 1 gelöst.

Demgemäß wird insbesondere vorgeschlagen, bei einem Kupplungskopf der eingangs genannten Art ferner ein an dem mindestens einen Verriegelungselement in einer vertikalen Ebene verschwenkbares angelenktes Hebelelement vorzusehen, welches mit Hilfe eines am Kupplungskopf befestigten Betätigungselements relativ zum Kuppeltrichter senkrecht zur Kupplungsrichtung bewegbar ist.

Die mit der erfindungsgemäßen Lösung erzielbaren Vorteile liegen auf der Hand. Durch das Vorsehen eines an dem mindestens einen Verriegelungselement angelenkten Hebelelements, welches mit Hilfe eines Betätigungselements relativ zum Kuppeltrichter senkrecht zur Kupplungsrichtung bewegbar ist, kann bei Betätigung des am Kupplungskopf befestigten Betätigungselements das mindestens eine am Hebelelement angelenkte Verriegelungselement relativ zum Kuppeltrichter des Kupplungskopfes bewegt werden, um auf diese Weise den Eingriff des mindestens einen Verriegelungselements mit einem in dem Kuppeltrichter aufgenommenen Kuppelelement zu lösen und somit das Herausgleiten des in dem Kuppeltrichter aufgenommenen Kuppelelements zu ermöglichen. Gegenüber einer herkömmlichen, bei Zugkupplungen vom Typ BSU zum Einsatz kommenden manuell betriebenen Kurbeltrieblösung, bei welcher der gesamte Entkuppelvorgang per Hand ausgeführt werden muss, wird bei der Erfindung der Entkuppelvorgang nur durch beispielsweise einen Handgriff ausgelöst, während der eigentliche Entkuppelvorgang, d.h. das Bewegen des mindestens einen Verriegelungselements relativ zum Kuppeltrichter des Kupplungskopfes, durch das am Kupplungskopf befestigte Betätigungselement ausgeführt wird, was einen erheblichen Zeitvorteil mit sich bringt und den Entkuppelvorgang erleichtert. Insbesondere muss kein zusätzliches Werkzeug, wie etwa ein kurbelähnliches Werkzeug, mitgeführt werden, um einen Entkuppelvorgang ausführend zu können.

Vorteilhafte Weiterbildungen der Erfindung sind in den abhängigen Ansprüchen angegeben.

So ist in einer möglichen Realisierung des Betätigungselements vorgesehen, dass dieses einen elektrisch, hydraulisch oder pneumatisch betätigbaren Teleskopstempel aufweist, welcher bei Betätigung des Betätigungselements wahlweise aus- oder einfahrbar ist. Durch das elektrisch, hydraulisch oder pneumatisch bewirkte Aus- bzw. Einfahren des Teleskopstempels lässt sich bei Bedarf das an dem mindestens einen Verriegelungselement angelenkte Hebelelement relativ zum Kuppeltrichter des Kupplungskopfes senkrecht zur Kupplungsrichtung bewegen, um das mindestens eine an dem Hebelelement angelenkte Verriegelungselement relativ zum Kuppeltrichter senkrecht zur Kupplungsrichtung zu bewegen und den Entkuppelvorgang auszuführen.

Alternativ zu der zuvor genannten Ausführungsform ist es selbstverständlich auch denkbar, dass das Betätigungselement einen mit Hilfe eines Federelements betätigbaren Teleskopstempel aufweist, welcher bei Betätigungselements ausfahrbar ist. Durch das Ausfahren des federbeaufschlagten Teleskopstempels wird das an dem mindestens einen Verriegelungselement angelenkte Hebelelement relativ zum Kuppeltrichter des Kupplungskopfes senkrecht zur Kupplungsrichtung bewegt, und infolgedessen das an dem Hebelelement angelenkte Verriegelungselement senkrecht zur Kupplungsrichtung relativ zum Kuppeltrichter bewegt, um beim Entkuppelvorgang den Eingriff mit einem in dem Kuppeltrichter aufgenommenen Kuppelelement zu lösen.

Denkbar hierbei ist es insbesondere, dass der Kupplungskopf ferner ein Sperrelement aufweist zum lösbaren Arretieren des Federelements in einer komprimierten Ausgangsposition, wobei diese Arretierung des Federelements durch das Sperrelement bei Betätigung des Betätigungselements gelöst werden kann. Bei dieser bevorzugten Weiterbildung der erfindungsgemäßen Lösung ist es zum Initiieren des Entkuppelvorganges lediglich erforderlich, dass das Sperrelement durch beispielsweise einen Handgriff ausgelöst wird, während der eigentliche Entkuppelvorgang durch den federbetätigten Teleskopstempel ausgeführt wird.

Bei der zuletzt genannten Ausführungsform des erfindungsgemäßen Kupplungskopfes, bei welcher das Betätigungselement einen mit Hilfe eines Federelements betätigbaren Teleskopstempel aufweist, ist es bevorzugt, wenn ferner eine vorzugsweise manuell betätigbare Spannvorrichtung vorgesehen ist, um das Federelement des Betätigungselements nach Betätigung des Betätigungselements wieder in die komprimierte Ausgangsposition zu überführen, in welcher das Federelement beispielsweise mit Hilfe eines Sperrelements lösbar arretiert wird. Beispielsweise kann das Sperrelement als Rastelement oder dergleichen ausgeführt sein, mit welchem das Federelement in der komprimierten Ausgangsposition gehalten wird, wobei zum Initiieren eines Entkuppelvorganges das Rastelement beispielsweise manuell zu entsperren ist. Nach dem Entkuppelvorgang wird die kuppelbereite Stellung des Kupplungskopfes wieder hergestellt, indem der mit Hilfe des Federelements betätigbare Teleskopstempel mit Hilfe der Spannvorrichtung wieder gespannt wird, bis der federbetätigte Teleskopstempel durch das beispielsweise als Rastelement ausgeführte Sperrelement in seiner Ausgangsposition arretiert wird. Insbesondere eignet sich als Spannvorrichtung beispielsweise eine Hebel- oder Seilzugvorrichtung.

In einer bevorzugten Realisierung des erfindungsgemäßen Kupplungskopfes kommt zum Übertragen einer bei Betätigung des Betätigungselements erzeugten Linearkraft auf das Hebelelement des mindestens einen Verriegelungselements ein Kraftübertragungsmechanismus zum Einsatz, welcher vorzugsweise eine drehbar an dem Kupplungskopf angebrachte Exzenterscheibe aufweist, deren Drehachse senkrecht zur Kupplungsrichtung und senkrecht zur Bewegungsrichtung des mindestens einen Verriegelungselements verläuft. Dabei ist es bevorzugt, wenn die Exzenterscheibe eine exzentrisch zum Drehpunkt der Exzenterscheibe geformte Seitenfläche aufweist, wobei das Hebelelement des mindestens einen Verriegelungselements einerseits und das Betätigungselement andererseits an der exzentrisch geformten Seitenfläche anliegen derart, dass bei Betätigung des Betätigungselements an der Exzenterscheibe ein Drehmoment erzeugt wird, welches zumindest teilweise als senkrecht zur Kupplungsrichtung wirkende Linearkraft auf das Hebelelement des mindestens einen Verriegelungselements übertragen wird. Ein derartiger Kraftübertragungsmechanismus zum Übertragen einer mit Hilfe des am Kupplungskopf befestigten Betätigungselements erzeugten Linearkraft auf das an dem mindestens einen Verriegelungselement angelenkten Hebelelement stellt eine leicht zu realisierende, aber dennoch effektive und insbesondere störungsfreie Möglichkeit dar, um bei einem Kupplungskopf der eingangs genannten Art und insbesondere bei einem Kupplungskopf einer russischen BSU-Zugkupplung zumindest einen halbautomatischen Entkupplungsvorgang realisieren zu können.

Insbesondere sollte die Form der Exzenterscheibe derart gewählt sein, dass bei einer Drehung der Exzenterscheibe das an dem mindestens einen Verriegelungselement angelenkte Hebelelement senkrecht zur Kupplungsrichtung relativ zu dem Kuppeltrichter des Kupplungskopfes bewegbar ist. Demnach wird bei Betätigung des Betätigungselements während des Entkuppelvorganges ein Drehmoment erzeugt, welches eine Drehung der Exzenterscheibe bewirkt. Durch die exzentrische Form der Exzenterscheibe wird bei einer Drehung der Exzenterscheibe das an dem mindestens einen Verriegelungselement angelenkte Hebelelement senkrecht zur Kupplungsrichtung in Bewegung versetzt, was aufgrund der Anlenkung des Hebelelements an dem mindestens einen Verriegelungselement zu einem Herausgleiten des Verriegelungselements aus dem Kuppeltrichter des Kupplungskopfes und damit zum Lösen der Kuppelverbindung führt.

Um eine Anfälligkeit des Kraftübertragungsmechanismus gegenüber Verschmutzungen und insbesondere einen Verschleiß der relativ zueinander sich bewegenden bzw. bewegbaren Bauteile zu reduzieren, ist in einer bevorzugten Realisierung der erfindungsgemäßen Lösung vorgesehen, dass das Betätigungselement, und insbesondere ein Teleskopstempel des Betätigungselements, über ein Lager, insbesondere eine Kugel oder eine Walze, an der exzentrisch geformten Seitenfläche der Exzenterscheibe anliegt.

Bevorzugt liegt bei dem Kraftübertragungsmechanismus auch das an dem mindestens einen Verriegelungselement angelenkte Hebelelement über ein Lager, insbesondere eine Kugel oder eine Walze, an der exzentrisch geformten Seitenfläche der Exzenterscheibe an.

Durch das Vorsehen eines derartigen Lagers zwischen dem Hebelelement und der Seitenfläche der Exzenterscheibe bzw. dem Betätigungselement und der Seitenfläche der Exzenterscheibe kann die Reibung der jeweiligen Kontaktflächen aufeinander reduziert werden, da die Kontaktflächen aufeinander abrollen. Daraus resultieren eine geringere Anfälligkeit des Kraftübertragungsmechanismus gegen Verschmutzung und ein geringerer Verschleiß.

Die Erfindung ist nicht auf einen Kupplungskopf beschränkt, bei welchem eine Exzenterscheibe zum Einsatz kommt, um mit Hilfe des Betätigungselements das mindestens eine Verriegelungselement zu bewegen. Vielmehr ist es beispielsweise denkbar, dass zum Übertragen einer bei Betätigung des Betätigungselements erzeugten Linearkraft auf das Hebelelement des mindestens einen Verriegelungselements ein Kraftübertragungsmechanismus zum Einsatz kommt, welcher einen Gabelhebel und einen Stufenhebel aufweist, wobei der Gabelhebel einerseits in einer vertikalen Ebene verschwenkbar an dem Hebelelement angelenkt ist und andererseits in einer horizontalen Ebene verschwenkbar an dem Stufenhebel angelenkt ist. Dabei sollte das Betätigungselement einen parallel zur Kupplungsrichtung ein- und ausfahrbaren Teleskopstempel aufweisen, an welchem der Stufenhebel in horizontaler Ebene verschwenkbar angelenkt ist.

Damit sich der Gabelhebel in einer Richtung senkrecht zur Kupplungsrichtung relativ zum Kupplungskopf definiert bewegen kann, ist bei der zuletzt genannten Ausführungsform vorzugsweise eine an dem Kupplungskopf befestigte Führung vorgesehen.

In einer bevorzugten Ausführungsform des erfindungsgemäßen Kupplungskopfes ist vorgesehen, dass zwei hinsichtlich der Längsachse des Kuppeltrichters gegenüberliegende Verriegelungselemente vorgesehen sind, welche jeweils senkrecht zur Kupplungsrichtung relativ zum Kuppeltrichter bewegbar und jeweils an einem Hebelelement angelenkt sind, wobei die beiden Hebelelemente simultan mit Hilfe eines gemeinsamen Betätigungselements relativ zu dem Kuppeltrichter senkrecht zur Kupplungsrichtung bewegbar sind. Das gemeinsame Betätigungselement kann einen mit Hilfe eines Federelements betätigbaren Teleskopstempel oder einen elektrisch, hydraulisch oder pneumatisch betätigbaren Teleskopstempel aufweisen, welcher - wie bereits zuvor ausgeführt - vorzugsweise über ein Lager an der Seitenfläche einer drehbar an dem Kupplungskopf angebrachten Exzenterscheibe anliegt, wobei die Drehachse der Exzenterscheibe auf der Mittenlängsachse des Kuppeltrichters senkrecht zur Kupplungsrichtung und senkrecht zur Bewegungsrichtung der beiden Verriegelungselemente verläuft.

Bei dieser Ausführungsform kommen somit ein gemeinsames Betätigungselement sowie ein gemeinsamer Kraftübertragungsmechanismus zum Einsatz, um die beiden Verriegelungselemente simultan bewegen zu können. Hierbei handelt es sich um eine leicht zu realisierende aber dennoch effektive Lösung, mit welcher wirksam verhindert werden kann, dass beim Entkuppelvorgang eines der beiden Verriegelungselemente verkantet oder festklemmt, während das andere Verriegelungselement aus dem Kuppeltrichter des Kupplungskopfes herausgefahren wird, was die Gefahr eines unvollständigen Entkuppelns und somit die Unfallgefahr erhöhen würde. Vielmehr können durch das Vorsehen eines gemeinsamen Kraftübertragungselements, welches über einen gemeinsamen Kraftübertragungsmechanismus mit den jeweiligen Hebelelementen und den jeweiligen Verriegelungselementen verbunden ist, die Verriegelungselemente bei Betätigung des Betätigungselements nur simultan, d.h. stets zeitgleich, zwangsbetätigt werden, so dass niemals nur ein einziges Verriegelungselement betätigt wird. Dies erhöht die Zuverlässigkeit der Entkuppelvorrichtung des erfindungsgemäßen Kupplungskopfes.

Die erfindungsgemäße Lösung ist nicht nur bei einem Kupplungskopf einer russischen Zugkupplung vom Typ BSU einsetzbar, bei welchem zusätzlich zum Kupplungskopf ein kraftübertragendes Kuppelelement vorzusehen ist, welches in dem Kuppeltrichter des Kupplungskopfes aufgenommen und dort mit Hilfe des mindestens einen Verriegelungselements lösbar gehalten wird. Vielmehr ist es grundsätzlich auch denkbar, die erfindungsgemäße Lösung beispielsweise auch bei einem Kupplungskopf einer Zugkupplung der Bauart "Georg Fischer" einzusetzen. In diesem Fall wäre der Kupplungskopf ausgebildet, um eine mechanische Verbindung mit einem baugleichen Gegenkupplungskopf auszubilden, wobei der Kupplungskopf zusätzlich zu dem Kuppeltrichter ein Kuppelelement aufweist, und wobei der Kuppeltrichter des Kupplungskopfes als Aufnahme ausgebildet ist zum Aufnehmen des Kuppelelements des Gegenkupplungskopfes.

Nachfolgend werden Ausführungsbeispiele der erfindungsgemäßen Lösung unter Bezugnahme auf die beiliegenden Zeichnungen näher beschrieben.

Es zeigen:
- Fig. 1: eine perspektivische Darstellung eines ersten Ausführungsbeispiels von einem Kupplungskopf einer Zugkupplung vom Typ BSU in einer gekuppelten Stellung;
- Fig. 2: eine perspektivische Darstellung des Kupplungskopfes gemäß Fig. 1 in einer kuppelbereiten Stellung;
- Fig. 3: eine schematische Draufsicht auf eine Entkuppelvorrichtung eines Kupplungskopfes gemäß dem ersten Ausführungsbeispiel der Erfindung, wobei die Entkuppelvorrichtung im nicht betätigten Zustand vorliegt;
- Fig. 4: eine schematische Draufsicht auf die Entkuppelvorrichtung gemäß Fig. 3, wobei die Entkuppelvorrichtung im betätigten Zustand vorliegt;
- Fig. 5: eine Draufsicht auf einen Kupplungskopf gemäß eines zweiten Ausführungsbeispiels der Erfindung, wobei der Kupplungskopf zusammen mit einem Gegenkupplungskopf im entkuppelten Zustand dargestellt ist;
- Fig. 6: eine Draufsicht auf den Kupplungskopf und Gegenkupplungskopf gemäß Fig. 5 im gekuppelten Zustand;
- Fig. 7: eine Vorderansicht auf den Kupplungskopf gemäß dem zweiten Ausführungsbeispiel im entkuppelten Zustand; und
- Fig. 8: eine Vorderansicht auf den Kupplungskopf gemäß dem zweiten Ausführungsbeispiel in einem gekuppelten Zustand.

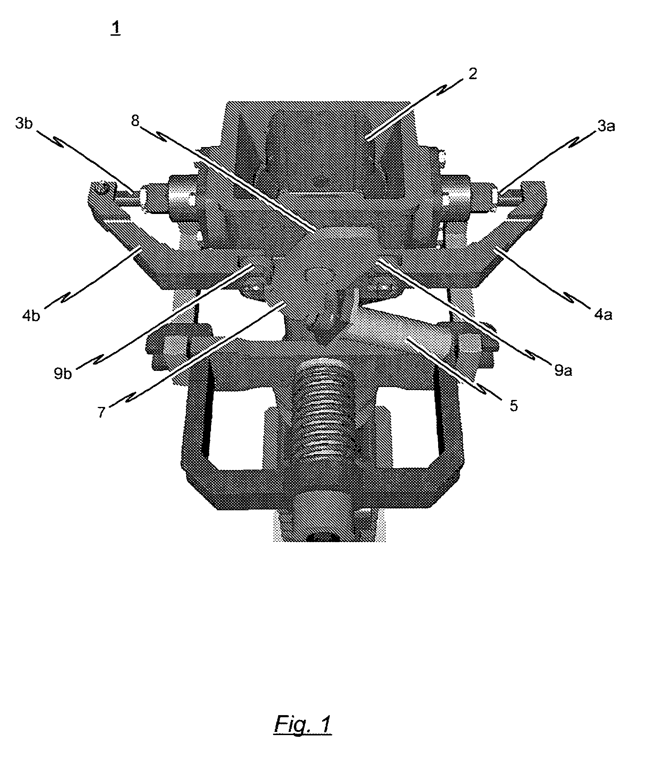

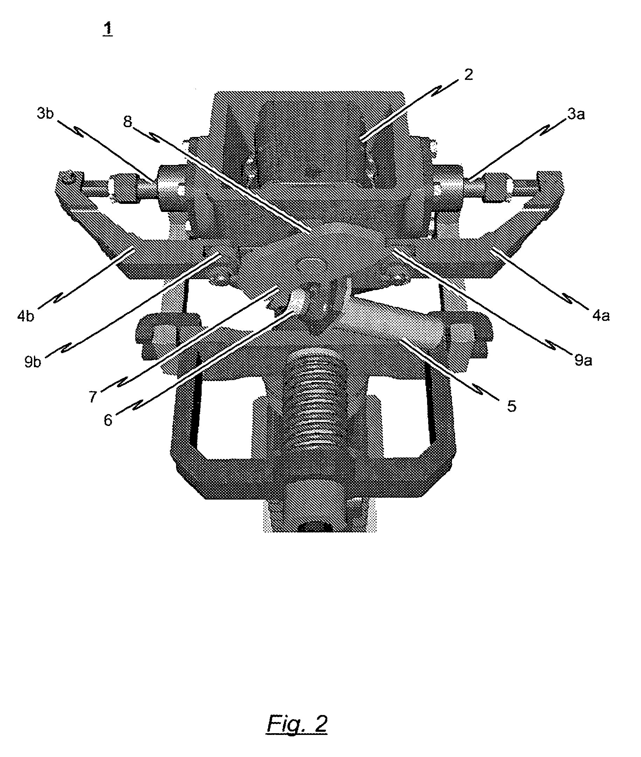

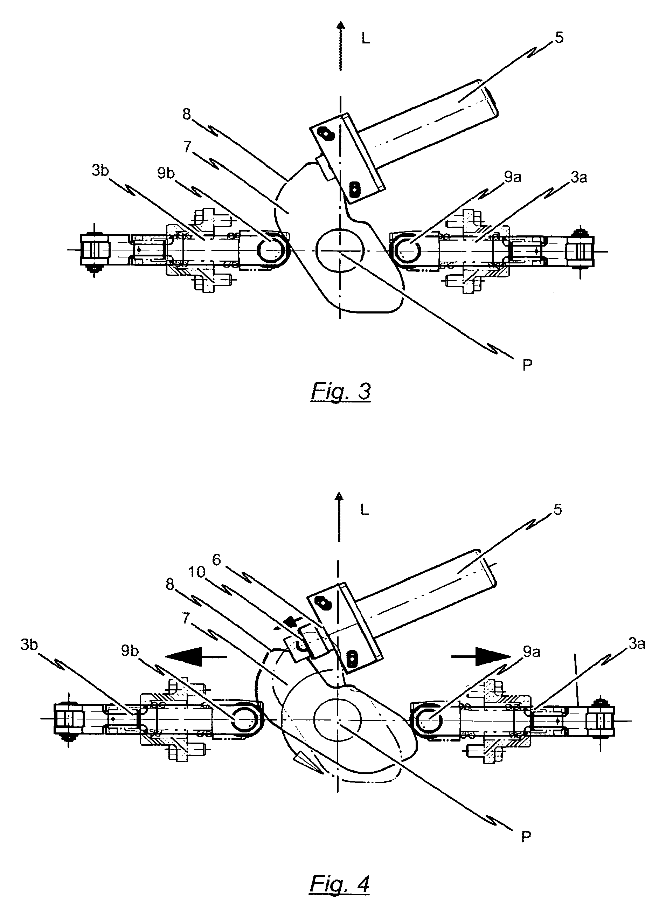

Nachfolgend wird unter Bezugnahme auf die Darstellungen in den Figuren 1 und 2 die Erfindung anhand eines ersten Ausführungsbeispiels näher beschrieben. Im Einzelnen ist in den Figuren 1 und 2 jeweils in einer perspektivischen Ansicht ein Kupplungskopf für eine russische Zugkupplung vom Typ BSU dargestellt, wobei in Fig. 1 der Kupplungskopf in seiner gekuppelten Stellung und in Fig. 2 der Kupplungskopf in seiner kuppelbereiten Stellung gezeigt ist. In den Figuren 3 und 4 ist jeweils in einer schematischen Draufsicht eine Entkuppelvorrichtung gezeigt, wie sie beispielsweise bei dem Kupplungskopf gemäß Fig. 1 oder Fig. 2 zum Einsatz kommt, wobei Fig. 3 einen Zustand zeigt, bei welcher die Entkuppelvorrichtung nicht betätigt ist, und wobei Fig. 4 einen Zustand nach Betätigung der Entkuppelvorrichtung zeigt.

Der perspektivisch in den Figuren 1 und 2 dargestellte Kupplungskopf 1 weist eine Aufnahme in Gestalt eines Kuppeltrichters 2 auf, wobei der Kuppeltrichter 2 dazu dient, ein (in den Zeichnungen nicht explizit dargestelltes) kraftübertragendes Kuppelelement aufzunehmen, welches mit einem Gegenkupplungskopf verbunden oder verbindbar ist. Zusätzlich zu dem Kuppeltrichter 2 weist der in den Figuren 1 und 2 dargestellte Kupplungskopf 1 mindestens ein, in den Figuren 1 und 2 genau zwei, senkrecht zur Kupplungsrichtung L relativ zum Kuppeltrichter 2 bewegbares Verriegelungselement 3a, 3b auf. Das mindestens eine Verriegelungselement 3a, 3b ist mit einem in dem Kuppeltrichter 2 aufgenommenen Kuppelelement in einen lösbaren Eingriff bringbar, um ein Herausgleiten eines in dem Kuppeltrichter 2 aufgenommenen Kuppelelements zu verhindern. Im Einzelnen ist in der Fig. 1 der Kupplungskopf 1 in einem Zustand gezeigt, in welchem die beiden Verriegelungselemente 3a, 3b in den Kuppeltrichter 2 des Kupplungskopfes 1 eingefahren sind, um somit ein in dem Kuppeltrichter 2 aufgenommenes Kuppelelement zu fixieren. Im Unterschied hierzu ist in Fig. 2 der Kupplungskopf 1 in einem Zustand gezeigt, in welchem die Verriegelungselemente 3a, 3b aus dem Kuppeltrichter 2 herausgefahren sind, infolgedessen die kraftschlüssige Verbindung mit einem in den Kuppeltrichter 2 aufgenommenen Kuppelelement gelöst ist.

Um bei der dargestellten Ausführungsform des erfindungsgemäßen Kupplungskopfes 1 die Verriegelungselemente 3a, 3b relativ zu dem Kuppeltrichter 2 senkrecht zur Kupplungsrichtung L bewegen zu können, kommt ein gemeinsames Betätigungselement 5 zum Einsatz, welches am Kupplungskopf 1 befestigt ist. Dieses gemeinsame Betätigungselement 5 wirkt über ein Kraftübertragungsmechanismus mit den beiden Verriegelungselementen 3a, 3b geeignet zusammen, so dass bei Betätigung des Betätigungselementes 5 die Verriegelungselemente 3a, 3b simultan relativ zu dem Kuppeltrichter 2 senkrecht zur Kupplungsrichtung L herausgefahren werden.

Im Einzelnen ist hierbei vorgesehen, dass an jedem Verriegelungselement 3a, 3b jeweils ein entsprechendes Hebelelement 4a, 4b angelenkt ist, wobei die beiden Hebelelemente 4a, 4b mit Hilfe des am Kupplungskopf 1 befestigten Betätigungselements 5 relativ zu dem Kuppeltrichter 2 senkrecht zur Kupplungsrichtung L bewegbar sind. Durch das Bewegen der Hebelelemente 4a, 4b relativ zu dem Kuppeltrichter 2 senkrecht zur Kupplungsrichtung L werden auch die mit den entsprechenden Hebelelementen 4a, 4b verbundenen Verriegelungselemente 3a, 3b relativ zu dem Kuppeltrichter 2 senkrecht zur Kupplungsrichtung L bewegt, um den Kupplungskopf 1 von seinem gekuppelten Zustand (vgl. Fig. 1) in seinen kuppelbereiten Zustand (vgl. Fig. 2) überführen zu können.

Das an dem Kupplungskopf 1 befestigte Betätigungselement 5 kann einen elektrisch, hydraulisch oder pneumatisch betätigbaren Teleskopstempel 6 aufweisen, welcher bei Betätigung des Betätigungselements 5 wahlweise aus- oder einfahrbar ist. Denkbar hierbei ist es allerdings auch, dass das Betätigungselement 5 einen mit Hilfe eines Federelements betätigbaren Teleskopstempel 6 aufweist, welcher bei Betätigung des Betätigungselements 5 ausfahrbar ist.

Wie es insbesondere auch den Darstellungen in den Figuren 3 und 4 entnommen werden kann, ist bei der erfindungsgemäßen Lösung zum Übertragen einer bei Betätigung des Betätigungselements 5 erzeugten Linearkraft auf die jeweiligen Hebelelemente 4a, 4b der beiden Verriegelungselemente 3a, 3b ein Kraftübertragungsmechanismus vorgesehen, welcher eine drehbar an dem Kupplungskopf 1 angebrachte Exzenterscheibe 7 aufweist. Im Einzelnen ist die Exzenterscheibe 7 derart an dem Kupplungskopf 2 angebracht, dass die Drehachse der Exzenterscheibe 7 senkrecht zur Kupplungsrichtung L und senkrecht zur Bewegungsrichtung der beiden Verriegelungselemente 3a, 3b verläuft.

Wie es den beiden Draufsichten gemäß Fig. 3 und Fig. 4 entnommen werden kann, weist die Exzenterscheibe 7 bei der dargestellten Ausführungsform eine exzentrisch zum Drehpunkt P der Exzenterscheibe 7 geformte Seitenfläche 8 auf. An dieser exzentrisch geformten Seitenfläche 8 liegen die beiden Hebelelemente 4a, 4b der Verriegelungselemente 3a, 3b einerseits und das Betätigungselement 5 bzw. der Teleskopstempel 6 des Betätigungselements 5 derart an, dass bei Betätigung des Betätigungselements 5 an der Exzenterscheibe 7 ein Drehmoment erzeugt wird, welches zumindest teilweise als senkrecht zur Kupplungsrichtung L wirkende Linerkraft auf die beiden Hebelelemente 4a, 4b und anschließend auf die mit den jeweiligen Hebelelementen 4a, 4b verbundene Verriegelungselemente 3a, 3b übertragen wird. Die Form der Exzenterscheibe 7 und somit die Seitenfläche 8 der Exzenterscheibe 7 ist derart gewählt, dass bei einer Drehung der Exzenterscheibe 7 die beiden Hebelelemente 4a, 4b simultan bewegt werden, und zwar derart, dass die jeweiligen mit den Hebelelementen 4a, 4b verbundenen Verriegelungselemente 3a, 3b zeitgleich senkrecht zur Kupplungsrichtung L relativ zu dem Kuppeltrichter 2 bewegt werden.

Wie es insbesondere den Darstellungen in den Figuren 1 und 2 entnommen werden kann, liegen die beiden Hebelelemente 4a, 4b über ein Lager 9a, 9b, welches eine Walze aufweist, an der exzentrisch geformten Seitenfläche 8 der Exzenterscheibe 7 an. Auf diese Weise werden ggf. auftretende Reibungen bei der Betätigung des Betätigungselementes 5 zwischen der Exzenterscheibe 7 und den Hebelelementen 4a, 4b reduziert.

Den Darstellungen in den Figuren 3 und 4 ist zu entnehmen, dass auch der Teleskopstempel 6 des Betätigungselementes 5 über ein Lager 10, welches vorzugsweise als Kugel oder Walze ausgeführt ist, an der exzentrisch geformten Seitenfläche 8 der Exzenterscheibe 7 anliegt, um auch an dieser Schnittstelle mögliche Reibungsverluste und damit Verschleiß zu reduzieren.

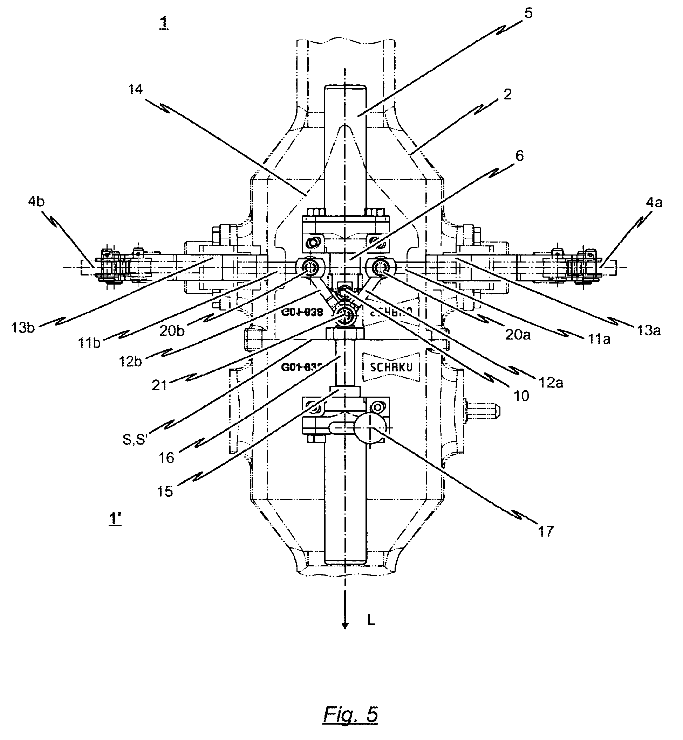

Nachfolgend wird unter Bezugnahme auf die Darstellungen in den Figuren 5 bis 8 ein zweites exemplarisches Ausführungsbeispiel des erfindungsgemäßen Kupplungskopfes 1 beschrieben.

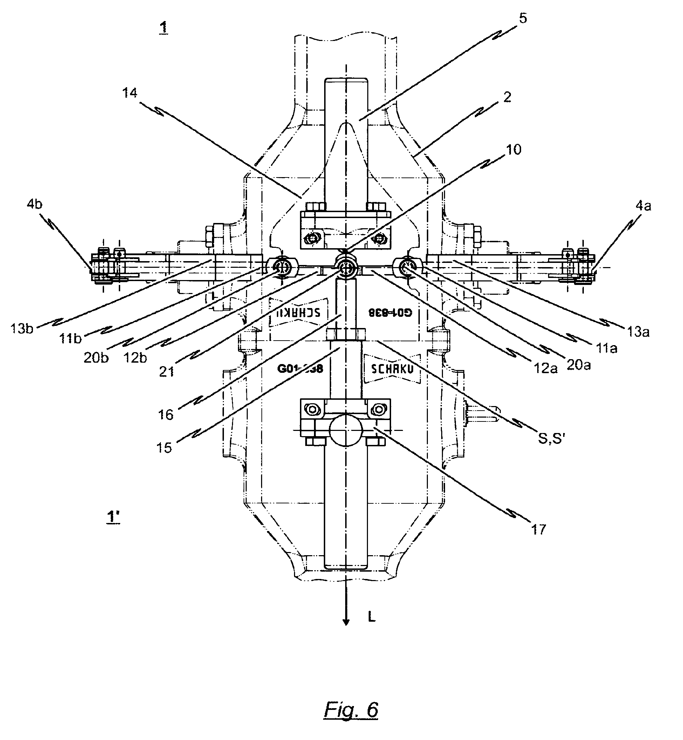

Im Einzelnen ist in den Figuren 5 und 6 jeweils in einer Draufsicht ein Kupplungskopf 1 zusammen mit einem Gegenkupplungskopf 1' gezeigt, wobei der Kupplungskopf 1 und der Gegenkupplungskopf 1' in der Darstellung gemäß Fig. 5 im entkuppelten Zustand und in der Darstellung gemäß Fig. 6 im gekuppelten Zustand vorliegen.

Der Kupplungskopf 1 gemäß dem zweiten Ausführungsbeispiel ist mit einem Kuppeltrichter 2 versehen, in welchem in den Darstellungen gemäß den Figuren 5 und 6 ein Kuppelelement 14 aufgenommen ist. Das in den Figuren 5 und 6 gestrichelt dargestellte Kuppelelement 14 ist mit dem Gegenkupplungskopf 1' mechanisch verbunden.

Des Weiteren weist der Kupplungskopf 1 gemäß dem zweiten Ausführungsbeispiel mindestens ein - in den Darstellungen gemäß den Figuren 5 bis 8 genau zwei - senkrecht zur Kupplungsrichtung L relativ zum Kuppeltrichter 2 bewegbares Verriegelungselement 3a, 3b auf. Diese Verriegelungselemente 3a, 3b sind mit dem in dem Kuppeltrichter 2 aufgenommenen Kuppelelement 14 in einen lösbaren Eingriff bringbar, um ein Herausgleiten des in dem Kuppeltrichter 2 aufgenommenen Kuppelelements 14 zu verhindern. Im Einzelnen ist in Fig. 5 der Kupplungskopf 1 in seiner entkuppelten Stellung gezeigt, in welcher also die Verriegelungselemente 3a, 3b nicht in Eingriff mit dem Kuppelelement 14 stehen. Andererseits ist in Fig. 6 der Kupplungskopf 1 in einem gekuppelten Zustand gezeigt, bei welchem die Verriegelungselemente 3a, 3b in Eingriff mit dem in dem Kuppeltrichter 2 des Kupplungskopfes 1 aufgenommenen Kuppelelement 14 stehen.

Wie auch bei dem ersten Ausführungsbeispiel ist bei dem zweiten Ausführungsbeispiel des erfindungsgemäßen Kupplungskopfes 1 jeweils ein Hebelelement 4a, 4b an dem entsprechenden Verriegelungselement 3a, 3b angelenkt. Die beiden Hebelelemente 4a, 4b sind mit Hilfe eines am Kupplungskopf 1 befestigten Betätigungselements 5 relativ zum Kuppeltrichter 2 senkrecht zur Kupplungsrichtung L bewegbar.

Bei der in den Figuren 5 bis 8 dargestellten Ausführungsform des erfindungsgemäßen Kupplungskopfes 1 weist das Betätigungselement 5 einen mit Hilfe eines Federelements betätigbaren Teleskopstempel 6 auf, welcher bei Betätigung des Betätigungselements 5 ausfahrbar ist. Anstelle eines federbetätigten Teleskopstempels 6 ist es selbstverständlich auch denkbar, dass das Betätigungselement 5 einen elektrisch, hydraulisch oder pneumatisch betätigbaren Teleskopstempel aufweist, welcher bei Betätigung des Betätigungselements 5 wahlweise aus- oder einfahrbar ist.

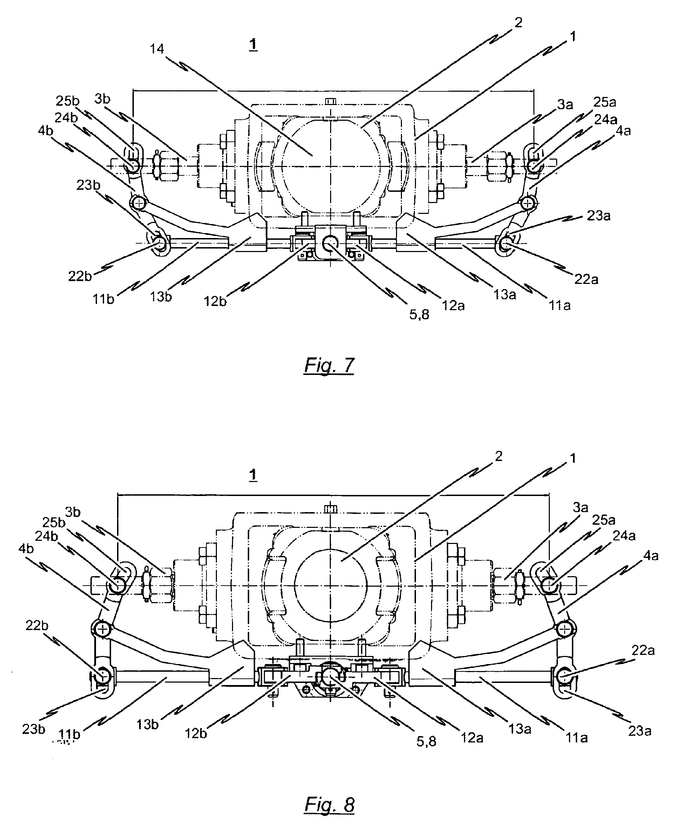

Wie es insbesondere den Darstellungen in den Figuren 7 und 8 entnommen werden kann, ist bei dem zweiten Ausführungsbeispiel des erfindungsgemäßen Kupplungskopfes 1 jedes Hebelelement 4a, 4b in vertikaler Ebene verschwenkbar an dem zugehörigen Verriegelungselement 3a, 3b angelenkt. Um die mit dem Betätigungselement 5 erzeugte Linearkraft auf die Hebelelemente 4a, 4b der entsprechenden Verriegelungselemente 3a, 3b übertragen zu können, kommt bei dem Kupplungskopf 1 gemäß dem zweiten Ausführungsbeispiel ein Kraftübertragungsmechanismus zum Einsatz, wobei dieser Kraftübertragungsmechanismus für jedes Hebelelement 4a, 4b einen Gabelhebel 11a, 11b sowie einen Stufenhebel 12a, 12b aufweist. Jeder der beiden Gabelhebel 11a, 11b ist in einer vertikalen Ebene verschwenkbar an dem zugehörigen Hebelelement 4a, 4b angelenkt. Am gegenüberliegenden Ende des Gabelhebels 11a, 11b ist dieser in einer horizontalen Ebene verschwenkbar an einem der beiden Stufenhebel 12a, 12b angelenkt.

Andererseits sind die Stufenhebel 12a, 12b an dem Teleskopstempel 6 des Betätigungselementes 5 angelenkt. Im Einzelnen ist bei dem in den Figuren 5 bis 8 dargestellten Kupplungskopf 1 das Betätigungselement 5 derart ausgelegt, dass es einen parallel zur Kupplungsrichtung L ein- und ausfahrbaren Teleskopstempel 6 aufweist.

Wie es insbesondere den Darstellungen in den Figuren 7 und 8 entnommen werden kann, sind bei dem zweiten Ausführungsbeispiel der vorliegenden Erfindung die Stufenhebel 12a, 12b und die Gabelhebel 11a, 11b unterhalb des Kupplungskopfes 1 angeordnet. Selbstverständlich ist es auch denkbar, die Stufenhebel 12a, 12b und die Gabelhebel 11a, 11b oberhalb des Kupplungskopfes 1 vorzusehen.

Die Gabelhebel 11a, 11b sind derart ausgeführt, dass diese bei Betätigung des Betätigungselementes 5 senkrecht zur Kupplungsrichtung L relativ zum Kupplungskopf 1 verschiebbar sind. Die Stufenhebel 12a, 12b, welche die Gabelhebel 11a, 11b mit dem Teleskopstempel 6 des Betätigungselementes 5 verbinden, sind in einem ersten Lagerpunkt 20a, 20b senkrecht zur Kupplungsrichtung L und in einem zweiten gemeinsamen Lagerpunkt 21 parallel zur Kupplungsrichtung L bewegbar angebracht.

Das Betätigungselement 5 mit dem Teleskopstempel 6 ist fest am Kupplungskopf 1 angebracht und so angeordnet, dass beim Auslösen des Betätigungselementes 5 der Teleskopstempel 6 parallel zur Kupplungsrichtung L in Bewegung versetzt wird, was durch seine Verbindung zu den Stufenhebeln 12a, 12b und deren Verbindung zu den Gabelhebeln 11a, 11b diese in eine Bewegung senkrecht zur Kupplungsrichtung L versetzt.

Die Gabelhebel 11a, 11b sind mit den Hebelelementen 4a, 4b jeweils über einen Bolzen 22a, 22b, der in einem Langloch 23a, 23b geführt wird, verbunden. Die Hebelelemente 4a, 4b werden durch die Bewegung der Gabelhebel 11a, 11b in eine Drehbewegung versetzt. Diese Drehbewegung versetzt die Verriegelungselemente 3a, 3b, welche die kraftübertragenden Kuppelelemente sind, wieder in eine Bewegung senkrecht zur Kupplungsrichtung L, was zum Herausgleiten der Verriegelungselemente 3a, 3b aus dem Kupplungskopf 1 und damit zum Lösen der Kuppelverbindung führt. Zu diesem Zweck sind die Verriegelungselemente 3a, 3b mit den Hebelelementen 4a, 4b jeweils über einen Bolzen 24a, 24b, der in einem Langloch 25a, 25b geführt wird, verbunden.

Die bei der zweiten Ausführungsform des erfindungsgemäßen Kupplungskopfes 1 zum Einsatz kommende Entkuppelvorrichtung ist ferner mit einem Auslösemechanismus ausgerüstet. Dieser Auslösemechanismus weist einen Druckstempel 16 und einen Gegenstempel 15 auf (vgl. Fig. 5 und Fig. 6).

Der Druckstempel 16 greift an dem Lagerpunkt 21 an, d.h. an dem gemeinsamen Lagerpunkt, über den die beiden Stufenhebel 12a, 12b miteinander gelenkig verbunden sind. Wie es den Darstellungen in den Figuren 5 und 6 entnommen werden kann, ist der Druckstempel 16 parallel zur Kupplungsrichtung L relativ zum Kupplungskopf 1 verschiebbar ausgeführt, und zwar in der Form, dass er im eingefahrenen Zustand (vgl. Fig. 5) in etwa bündig mit der Stirnfläche S des Kupplungskopfes 1 abschließt. In dieser Stellung wird der Druckstempel 16 durch den Gegenstempel 15 des Gegenkupplungskopfes 1' am Ausfahren gehindert. Nach dem Entkuppeln steht der Druckstempel 16 über die Stirnfläche S des Kupplungskopfes 1 hinaus (vgl. Fig. 6).

Der Gegenstempel 15 ist am Gegenkupplungskopf 1' angebracht, und zwar derart, dass er dem Kupplungskopf 1 genau gegenübersteht und in arretierter Stellung ungefähr bündig mit der Stirnfläche S des Kupplungskopfes 1 ist. Der Gegenstempel 15 wird durch eine Feder (nicht explizit dargestellt) in Richtung der Stirnfläche S gedrückt. Die Federkraft der Feder ist deutlich geringer als die Kraft des Teleskopstempels 6 des Betätigungselementes 5 und dient nur dem Wiederherstellen des kuppelbereiten Zustandes durch Vorschieben des Gegenstempels 15 bis zum Einrasten in Arretiereinrichtung 17, wie beispielsweise eine Federraste, nach dem Entkuppeln.

Das Auslösen der Entkuppelvorrichtung geschieht vom Gegenkupplungskopf 1' aus, und zwar indem die Arretiereinrichtung 17 entsperrt wird. Die beispielsweise in Gestalt einer Federraste ausgeführte Arretiereinrichtung 17 verhindert bei gekuppelten Zügen in arretierter Stellung das Vorfahren von dem Teleskopstempel 6 des Betätigungselementes 5 und damit ein Zurückfahren des Gegenstempels 15.

Nach dem Entkuppeln der Kupplungsköpfe 1, 1' wird die Kuppelbereitstellung wiederhergestellt, indem der Gegenstempel 15 durch die ihm zugeordnete Feder wieder vorgedrückt wird bis er durch die Arretiereinrichtung 17 in seiner Ausgangsposition, ungefähr bündig mit der Stirnfläche S' des Gegenkupplungskopfes 1' abschließend arretiert wird.

Beim erneuten Kuppeln zweier Kupplungsköpfe 1, 1' wird der sich noch in ausgelöster Stellung über die Stirnfläche des Kupplungskopfes 1 hinausragende Druckstempel 16 vom ungefähr bündig mit der Stirnfläche S' vom Gegenkupplungskopf 1' abschließenden und in dieser Position durch die Arretiereinrichtung 17 arretierten Gegenstempel 15 zurückgeschoben und der oben beschriebene Bewegungsablauf der Hebelkinematik läuft nun umgekehrt ab.

Bei den dargestellten Ausführungsformen des erfindungsgemäßen Kupplungskopfes 1 sind zwei Verriegelungselemente 3a, 3b vorgesehen, welche mit Hilfe des Kraftübertragungsmechanismus simultan relativ zu dem Kuppeltrichter 2 bewegbar sind. Da hierfür ein gemeinsames Betätigungselement 5 sowie ein gemeinsamer Kraftübertragungsmechanismus mit der Exzenterscheibe 7 zum Einsatz kommen, ist die Drehachse der Exzenterscheibe 7 auf der Mittenlängsachse des Kuppeltrichters 2 vorzusehen, und zwar derart, dass die Drehachse der Exzenterscheibe 7 senkrecht zur Kupplungsrichtung L und senkrecht zur Bewegungsrichtung der beiden Verriegelungselemente 3a, 3b verläuft.

Die Erfindung ist nicht auf einen Kupplungskopf 1 beschränkt, bei welchem zwei Verriegelungselemente 3a, 3b zum Einsatz kommen. Vielmehr ist es grundsätzlich auch denkbar, dass nur ein einziges Verriegelungselement vorgesehen ist, welches bei Betätigung des Betätigungselementes 5 senkrecht zur Kupplungsrichtung L relativ zu dem Kuppeltrichter 2 bewegbar ist, um den Kupplungskopf 1 von seinem gekuppelten Zustand in seinen kuppelbereiten Zustand zu überführen.

Obwohl nicht explizit in den Zeichnungen dargestellt, ist es bevorzugt, wenn das Betätigungselement 5 einen mit Hilfe eines Federelements betätigbaren Teleskopstempel 6 aufweist, welcher bei Betätigung des Betätigungslements 5 ausfahrbar ist. Hierbei handelt es sich um eine besonders robuste Ausführung, welche sich insbesondere für raue Witterungsbedingungen eignet.

Wenn ein Betätigungselement 5 zum Einsatz kommt, das einen federbetätigbaren Teleskopstempel aufweist, ist es bevorzugt, zusätzlich ein Sperrelement vorzusehen zum lösbaren Arretieren des Federelements des federbetätigbaren Teleskopstempels 6 in einer komprimierten Ausgangsposition, wobei diese Arretierung bei Betätigung des Betätigungselementes 5 gelöst wird. Denkbar ist es beispielsweise als Sperrelement eine Federraste oder dergleichen zu verwenden. Zusätzlich ist es bevorzugt, eine vorzugsweise manuell betätigbare Spannvorrichtung vorzusehen, um das Federelement des federbetätigbaren Teleskopstempels 6 nach Betätigung des Betätigungselements 5 in die komprimierte Ausgangsposition wieder überführen zu können. Für eine derartige Spannvorrichtung kommen unterschiedliche Ausführungsformen in Frage. Denkbar ist insbesondere eine Hebel- oder Seilzugvorrichtung.

Die Erfindung ist nicht auf einen Kupplungskopf für eine Zugkupplung vom Typ BSU beschränkt. Grundsätzlich ist es auch denkbar, dass die Erfindung beispielsweise bei einem Kupplungskopf einer Zugkupplung der Bauart "Georg Fischer" eingesetzt wird. Bei dieser Realisierung ist der Kupplungskopf 1 zum Ausbilden einer mechanischen Verbindung mit einem baugleichen Gegenkupplungskopf ausgebildet, wobei hierzu kein separates Kuppelelement vorzusehen ist, um die beiden Kupplungsköpfe mechanisch miteinander verbinden zu können. Vielmehr ist jeder Kupplungskopf einerseits mit einem Kuppelelement und andererseits mit einem Kuppeltrichter ausgerüstet, wobei der Kuppeltrichter des Kupplungskopfes als Aufnahme zum Aufnehmen des Kuppelelements des Gegenkupplungskopfes ausgebildet ist.

### Bezugszeichenliste

- 1: Kupplungskopf
- 1': Gegenkupplungskopf
- 2: Kuppeltrichter
- 3a, 3b: Verriegelungselement
- 4a, 4b: Hebelelement
- 5: Betätigungselement
- 6: Teleskopstempel
- 7: Exzenterscheibe
- 8: Seitenfläche der Exzenterscheibe
- 9a, 9b: Lager des Hebelelements
- 10: Lager des Betätigungselements
- 11a, 11b: Gabelhebel
- 12a, 12b: Stufenhebel
- 13a, 13b: Führung
- 14: Kuppelelement
- 15: Gegenstempel
- 16: Druckstempel
- 17: Arretiereinrichtung
- 20a, 20b: erster Lagerpunkt
- 21: zweiter Lagerpunkt
- 22a, 22b: Bolzen
- 23a, 23b: Langloch
- 24a, 24b: Bolzen
- 25a, 25b: Langloch
- L: Kupplungsrichtung
- P: Drehpunkt der Exzenterscheibe
- S: Stirnfläche des Kupplungskopfes
- S': Stirnfläche des Gegenkupplungskopfes

## Patentansprüche

1. Kupplungskopf (1) für ein spurgeführtes Fahrzeug zum Ausbilden einer mechanischen Verbindung mit einem Gegenkupplungskopf, wobei der Kupplungskopf (1) folgendes aufweist:
- einen Kuppeltrichter (2) zum Aufnehmen eines mit dem Gegenkupplungskopf verbundenen oder verbindbaren kraftübertragenden Kuppelelements; und
- mindestens ein senkrecht zur Kupplungsrichtung (L) relativ zum Kuppeltrichter (2) bewegbares Verriegelungselement (3a, 3b), welches mit einem in dem Kuppeltrichter (2) aufgenommenen Kuppelelement in einen lösbaren Eingriff bringbar ist zum Verhindern eines Herausgleitens des in dem Kuppeltrichter (2) aufgenommenen Kuppelelements,
wobei ferner ein an dem mindestens einen Verriegelungselement (3a, 3b) in einer vertikalen Ebene verschwenkbar angelenktes Hebelelement (4a, 4b) vorgesehen ist, welches mit Hilfe eines am Kupplungskopf (1) befestigten Betätigungselements (5) relativ zum Kuppeltrichter (2) senkrecht zur Kupplungsrichtung (L) bewegbar ist,
**dadurch gekennzeichnet,**
**dass** zwei hinsichtlich der Längsachse des Kuppeltrichters (2) gegenüberliegende Verriegelungselemente (3a, 3b) vorgesehen sind, welche jeweils senkrecht zur Kupplungsrichtung (L) relativ zum Kuppeltrichter (2) bewegbar und jeweils an einem in einer vertikalen Ebene verschwenkbaren Hebelelement (4a, 4b) angelenkt sind, wobei die beiden Hebelelemente (4a, 4b) simultan mit Hilfe des gemeinsamen Betätigungselements (5) relativ zu dem Kuppeltrichter (2) senkrecht zur Kupplungsrichtung (L) bewegbar sind.

2. Kupplungskopf (1) nach Anspruch 1,
wobei das Betätigungselement (5) einen elektrisch, hydraulisch oder pneumatisch betätigbaren Teleskopstempel (6) aufweist, welcher bei Betätigung des Betätigungselements (5) wahlweise aus- oder einfahrbar ist.

3. Kupplungskopf (1) nach Anspruch 1,
wobei das Betätigungselement (5) einen mit Hilfe eines Federelements betätigbaren Teleskopstempel (6) aufweist, welcher bei Betätigung des Betätigungselements (5) ausfahrbar ist.

4. Kupplungskopf (1) nach Anspruch 3,
wobei ferner ein Sperrelement oder eine Arretiereinrichtung (17) vorgesehen ist zum lösbaren Arretieren des Federelements in einer komprimierten Ausgangsposition, wobei die Arretierung des Federelements durch das Sperrelement zum Betätigen des Betätigungselements (5) gelöst wird.

5. Kupplungskopf (1) nach Anspruch 3 oder 4,
wobei ferner eine vorzugsweise manuell betätigbare Spannvorrichtung vorgesehen ist zum Überführen des Federelements in die komprimierte Ausgangsposition nach Betätigung des Betätigungselements (5).

6. Kupplungskopf (1) nach einem der vorhergehenden Ansprüche,
wobei ferner ein Kraftübertragungsmechanismus vorgesehen ist zum Übertragen einer bei Betätigung des Betätigungselements (5) erzeugten Linearkraft auf das Hebelelement (4a, 4b) des mindestens einen Verriegelungselements (3a, 3b).

7. Kupplungskopf (1) nach Anspruch 6,
wobei das Hebelelement (4a, 4b) in einer horizontalen Ebene verschwenkbar an dem zugehörigen Verriegelungselement (3a, 3b) angelenkt ist, und wobei der Kraftübertragungsmechanismus eine drehbar an dem Kupplungskopf (1) angebrachte Exzenterscheibe (7) aufweist, wobei die Drehachse der Exzenterscheibe (7) senkrecht zur Kupplungsrichtung (L) und senkrecht zur Bewegungsrichtung des mindestens einen Verriegelungselements (3a, 3b) verläuft.

8. Kupplungskopf (1) nach Anspruch 7,
wobei die Exzenterscheibe (7) eine exzentrisch zum Drehpunkt (P) der Exzenterscheibe (7) geformte Seitenfläche (8) aufweist und das Hebelelement (4a, 4b) des mindestens einen Verriegelungselements (3a, 3b) einerseits und das Betätigungselement (5) andererseits an der exzentrisch geformten Seitenfläche (8) anliegen derart, dass bei Betätigung des Betätigungselements (5) an der Exzenterscheibe (7) ein Drehmoment erzeugt wird, welches zumindest teilweise als senkrecht zur Kupplungsrichtung (L) wirkende Linearkraft auf das Hebelelement (4a, 4b) des mindestens einen Verriegelungselements (3a, 3b) übertragen wird.

9. Kupplungskopf (1) nach Anspruch 7 oder 8,
wobei die Form der Exzenterscheibe (7) derart gewählt ist, dass bei einer Drehung der Exzenterscheibe (7) das Hebelelement (4a, 4b) des mindestens einen Verriegelungselements (3a, 3b) senkrecht zur Kupplungsrichtung (L) relativ zu dem Kuppeltrichter bewegbar ist.

10. Kupplungskopf (1) nach Anspruch 8 oder 9,
wobei das Hebelelement (4a, 4b) über ein Lager (9a, 9b), insbesondere eine Kugel oder eine Walze, an der exzentrisch geformten Seitenfläche (8) der Exzenterscheibe (7) anliegt.

11. Kupplungskopf (1) nach einem der Ansprüche 8 bis 10,
wobei das Betätigungselement, und insbesondere ein Teleskopstempel (6) des Betätigungselements (5), über ein Lager (10), insbesondere eine Kugel oder eine Walze, an der exzentrisch geformten Seitenfläche (8) der Exzenterscheibe (7) anliegt.

12. Kupplungskopf (1) nach Anspruch 6,
wobei das Hebelelement (4a, 4b) in einer vertikalen Ebene verschwenkbar an dem zugehörigen Verriegelungselement (3a, 3b) angelenkt ist, und wobei der Kraftübertragungsmechanismus einen Gabelhebel (11a, 11b) und einen Stufenhebel (12a, 12b) aufweist, wobei der Gabelhebel (11a, 11b) einerseits in einer vertikalen Ebene verschwenkbar an dem Hebelelement (4a, 4b) angelenkt ist und andererseits in einer horizontalen Ebene verschwenkbar an dem Stufenhebel (12a, 12b) angelenkt ist.

13. Kupplungskopf (1) nach Anspruch 12,
wobei das Betätigungslement (5) einen parallel zur Kupplungsrichtung (L) ein-und ausfahrbaren Teleskopstempel (6) aufweist, welcher über ein Lager (10), insbesondere eine Kugel oder eine Walze, an dem Stufenhebel (12a, 12b) anliegt.

14. Kupplungskopf (1) nach Anspruch 12 oder 13,
wobei ferner eine an dem Kupplungskopf (1) befestigte Führung (13a, 13b) vorgesehen ist zum Führen der Bewegung des Gabelhebels (11a, 11b) in einer Richtung senkrecht zur Kupplungsrichtung (L) relativ zum Kupplungskopf (1).

15. Kupplungskopf (1) nach einem der Ansprüche 12 bis 14,
wobei das Hebelelement (4a, 4b) in einer vertikalen Ebene verschwenkbar mit dem Kupplungskopf (1) verbunden ist.

## Claims

1. A coupling head (1) for a railway vehicle for establishing a mechanical connection with a counter-coupling head, wherein the coupling head (1) comprises the following:
- a dome funnel (2) for receiving a dome element connected or connectable to the counter-coupling head; and
- at least one locking element (3a, 3b) able to move perpendicular to the coupling direction (L) relative the dome funnel (2) which can detachably engage with a dome element received in the dome funnel (2) to prevent the dome element received in the dome funnel (2) from sliding out,
wherein an articulated lever element (4a, 4b) able to pivot perpendicularly is further provided which can move perpendicular to the coupling direction (L) relative the dome funnel (2) by means of an actuating element (5) affixed to the coupling head (1), **characterized in that**
two opposing locking elements (3a, 3b) in terms of the longitudinal axis of the dome funnel (2) are provided, each being able to move perpendicular to the coupling direction (L) relative the dome funnel (2) and each articulated to a lever element (4a, 4b) able to pivot in a vertical plane, wherein the two lever elements (4a, 4b) are simultaneously able to move perpendicular to the coupling direction (L) relative to the dome funnel (2) by means of the common actuating element (5).

2. The coupling head (1) according to claim 1,
wherein the actuating element (5) comprises an electrically, hydraulically or pneumatically actuatable telescopic plunger (6) which can be selectively extended or retracted upon the actuating element (5) being actuated.

3. The coupling head (1) according to claim 1,
wherein the actuating element (5) comprises a telescopic plunger (6) able to be actuated by means of a spring element which can be extended upon said actuating element (5) being actuated.

4. The coupling head (1) according to claim 3,
wherein a locking element or a locking device (17) is further provided to releasably lock the spring element in a compressed initial position, wherein the locking element's locking of the spring element is disengaged to actuate the actuating element (5).

5. The coupling head (1) according to claim 3 or 4,
wherein a preferably manually actuatable tensioning device is further provided to convey the spring element into the compressed initial position after the actuating element (5) is actuated.

6. The coupling head (1) according to any one of the preceding claims,
wherein a force transmission mechanism is further provided for transmitting a linear force generated upon the actuating of the actuating element (5) to the lever element (4a, 4b) of the at least one locking element (3a, 3b).

7. The coupling head (1) according to claim 6,
wherein the lever element (4a, 4b) is articulated to the associated locking element (3a, 3b) so as to be pivotable in a horizontal plane, and wherein the force transmission mechanism comprises an eccentric disk (7) pivotably mounted to the coupling head (1), wherein the rotational axis of the eccentric disk (7) runs perpendicular to the coupling direction (L) and perpendicular to the direction of movement of the at least one locking element (3a, 3b).

8. The coupling head (1) according to claim 7,
wherein the eccentric disk (7) comprises a lateral surface (8) formed eccentrically to the fulcrum (P) of said eccentric disk (7) and the lever element (4a, 4b) of the at least one locking element (3a, 3b) on the one hand and the actuating element (5) on the other abuts the eccentrically formed lateral surface (8) such that a torque is produced on the eccentric disk (7) upon the actuating element (5) being actuated which is at least partially transmitted as linear force acting on the lever element (4a, 4b) of the at least one locking element (3a, 3b) perpendicular to the coupling direction (L).

9. The coupling head (1) according to claim 7 or 8,
wherein the form of the eccentric disk (7) is selected such that the lever element (4a, 4b) of the at least one locking element (3a, 3b) can move perpendicular to the coupling direction (L) relative to the dome funnel upon a pivoting of said eccentric disk (7).

10. The coupling head (1) according to claim 8 or 9,
wherein the lever element (4a, 4b) abuts the eccentrically formed lateral surface (8) of the eccentric disk (7) via a bearing (9a, 9b), particularly a ball or a roller.

11. The coupling head (1) according to any one of claims 8 to 10,
wherein the actuating element, and particularly a telescopic plunger (6) of said actuating element (5), abuts the eccentrically formed lateral surface (8) of the eccentric disk (7) via a bearing (10), particularly a ball or a roller.

12. The coupling head (1) according to claim 6,
wherein the lever element (4a, 4b) is pivotably articulated to the associated locking element (3a, 3b) in a vertical plane, and wherein the force transmission mechanism comprises a fork lever (11a, 11b) and a step lever (12a, 12b), wherein the fork lever (11a, 11b) is pivotably articulated to the lever element (4a, 4b) in a vertical plane on the one side and pivotably articulated to the step lever (12a, 12b) in a horizontal plane on the other.

13. The coupling head (1) according to claim 12,
wherein the actuating element (5) comprises a telescopic plunger (6) able to be extended and retracted parallel to the coupling direction (L) which abuts the step lever (12a, 12b) via a bearing (10), particularly a ball or a roller.

14. The coupling head (1) according to claim 12 or 13,
wherein a guide (13a, 13b) affixed to the coupling head (1) is further provided for guiding the movement of the fork lever (11 a, 11b) in a direction perpendicular to the coupling direction (L) relative the coupling head (1).

15. The coupling head (1) according to any one of claims 12 to 14,
wherein the lever element (4a, 4b) is pivotably connected to the coupling head (1) in a vertical plane.

## Revendications

1. Tête d'attelage (1) pour un véhicule guidé sur voie destinée à établir une liaison mécanique avec une tête d'attelage antagoniste, ladite tête d'attelage (1) comprenant les éléments suivants :
- un entonnoir d'accouplement (2) pour recevoir un élément d'accouplement et de transmission de force relié ou susceptible d'être relié à la tête de l'attelage antagoniste ; et
- au moins un élément de verrouillage (3a, 3b) déplaçable perpendiculairement à la direction d'accouplement (L) par rapport à l'entonnoir d'accouplement (2), élément de verrouillage qui peut être amené en engagement de manière détachable avec un élément d'accouplement reçu dans l'entonnoir d'accouplement (2) pour empêcher que l'élément d'accouplement reçu dans l'entonnoir d'accouplement (2) glisse hors de celui-ci,
dans laquelle il est en outre prévu un élément de levier (4a, 4b) articulé sur ledit au moins un élément de verrouillage (3a, 3b) avec possibilité de pivotement dans un plan vertical, l'élément de levier étant déplaçable perpendiculairement à la direction d'accouplement (L) par rapport à l'entonnoir d'accouplement (2) à l'aide d'un élément d'actionnement (5) fixé sur la tête d'attelage (1),
**caractérisée en ce que**
il est prévu deux éléments de verrouillage (3a, 3b) opposés vis-à-vis de l'axe longitudinal de l'entonnoir d'accouplement (2), lesquels sont respectivement déplaçables par rapport à l'entonnoir d'accouplement (2) perpendiculairement à la direction d'accouplement (L) et sont respectivement articulés sur un élément de levier (4a, 4b) capable de pivoter dans un plan vertical, et les deux éléments de levier (4a, 4b) sont déplaçables simultanément à l'aide de l'élément d'actionnement commun (5) perpendiculairement à la direction d'accouplement (L) par rapport à l'entonnoir d'accouplement (2).

2. Tête d'attelage (1) selon la revendication 1,
dans laquelle l'élément d'actionnement (5) comprend un poinçon télescopique (6) à actionnement électrique, hydraulique ou pneumatique, qui est peut au choix être déployé ou rétracté lors de l'actionnement de l'élément d'actionnement (5).

3. Tête d'attelage (1) selon la revendication 1,
dans laquelle l'élément d'actionnement (5) comprend un poinçon télescopique (6) susceptible d'être actionné à l'aide d'un élément de ressort et d'être déployé lors de l'actionnement de l'élément d'actionnement (5).

4. Tête d'attelage (1) selon la revendication 3,
dans laquelle il est en outre prévu un élément de blocage ou un moyen d'arrêt (17) pour arrêter de manière détachable l'élément de ressort dans une position de départ comprimée, et l'arrêt de l'élément de ressort par l'élément de blocage est libéré pour actionner l'élément d'actionnement (5).

5. Tête d'attelage (1) selon la revendication 3 ou 4,
dans laquelle il est en outre prévu un dispositif de tensionnement, de préférence à actionnement manuel, pour faire passer l'élément de ressort dans la position de départ comprimée après actionnement de l'élément d'actionnement (5).

6. Tête d'attelage (1) selon l'une des revendications précédentes,
dans laquelle il est en outre prévu un mécanisme de transmission de force pour transmettre à l'élément de levier (4a, 4b) dudit au moins un élément de verrouillage (3a, 3b) une force linéaire engendrée lors de l'actionnement de l'élément d'actionnement (5).

7. Tête d'attelage (1) selon la revendication 6,
dans laquelle l'élément de levier (4) a, 4b) est articulé sur l'élément de verrouillage associé (3a, 3b) avec possibilité de pivotement dans un plan horizontal, et dans laquelle le mécanisme de transmission de force comprend une plaque à excentrique (7) montée en rotation sur la tête d'attelage (1), l'axe de rotation de la plaque à excentrique (7) étant perpendiculaire à la direction d'accouplement (L) et perpendiculaire à la direction de déplacement dudit au moins un élément de verrouillage (3a, 3b).

8. Tête d'attelage (1) selon la revendication 7,
dans laquelle la plaque à excentrique (7) comporte une surface latérale (8) conformée de manière excentrique par rapport au centre de rotation (P) de la plaque à excentrique (7), et l'élément de levier (4a, 4b) dudit au moins un élément de verrouillage (3a, 3b) d'une part et l'élément d'actionnement (5) d'autre part sont appliqués contre la surface latérale (8) conformée de manière excentrique de telle façon que lors de l'actionnement de l'élément d'actionnement (5), cela engendre au niveau de la plaque à excentrique (7) un couple de rotation qui est au moins partiellement transmis, comme une force linéaire agissant perpendiculairement à la direction d'accouplement (L), sur l'élément de levier (4a, 4b) dudit au moins un élément de verrouillage (3a, 3b).

9. Tête d'attelage (1) selon la revendication 7 ou 8,
dans laquelle la forme de la plaque à excentriques (7) est choisie de telle manière que lors d'une rotation de la plaque à excentrique (7) l'élément de levier (4a, 4b) dudit au moins un élément de verrouillage (3a, 3b) est déplaçable perpendiculairement à la direction d'accouplement (L) par rapport à l'entonnoir d'accouplement.

10. Tête d'attelage (1) selon la revendication 8 ou 9,
dans laquelle l'élément de levier (4a, 4b) est appliqué contre la surface latérale (8) conformée de manière excentrique, de la plaque à excentrique (7), via un palier (9a, 9b), en particulier une sphère ou un cylindre.

11. Tête d'attelage (1) selon l'une des revendications 8 à 10,
dans laquelle l'élément d'actionnement, et en particulier un poinçon télescopique (6) de l'élément d'actionnement (5) est appliqué contre la surface latérale (8) conformée de manière excentrique, de la plaque à excentrique (7), via un palier (10), en particulier une sphère ou un cylindre.

12. Tête d'attelage (1) selon la revendication 6,
dans laquelle l'élément de levier (4a, 4b) est articulé sur l'élément de verrouillage associé (3a, 3b) avec possibilité de pivotement dans un plan vertical, et dans laquelle le mécanisme de transmission de force comprend un levier à fourche (11a, 11b) et un levier à gradins (12a, 12b), le levier à fourche (11a, 11b) étant articulé d'une part sur l'élément de levier (4a, 4b) avec possibilité de pivotement dans un plan vertical, et étant articulé d'autre part sur le levier à gradins (12a, 12b) avec possibilité de pivotement dans un plan horizontal.

13. Tête d'attelage (1) selon la revendication 12,
dans laquelle l'élément d'actionnement (5) comprend un poinçon télescopique (6) susceptible d'être rétracté et déployé parallèlement à la direction d'accouplement (L), lequel est appliqué contre le levier à gradins (12a, 12b) via un palier (10), en particulier une sphère ou un cylindre.

14. Tête d'attelage (1) selon la revendication 12 ou 13,
dans laquelle il est en outre prévu un guidage (13a, 13b) fixé sur la tête d'attelage (1) pour guider le déplacement du levier à fourche (11a, 11b) par rapport à la tête d'attelage (1) dans une direction perpendiculaire à la direction d'accouplement (L).

15. Tête d'attelage (1) selon l'une des revendications 12 à 14,
dans laquelle l'élément de levier (4a, 4b) est relié avec la tête d'attelage (1) avec possibilité de pivotement dans un plan vertical.
